# EUROPÄISCHE PATENTSCHRIFT

(11) **EP 3 868 546 B1**
(45) Veröffentlichungstag und Bekanntmachung des Hinweises auf die Patenterteilung: **08.11.2023**
(21) Anmeldenummer: 21157505.5
(22) Anmeldetag: 17.02.2021
(51) Int. Cl.: B29C 64/40, B29C 64/112, B29C 64/209, B29C 64/194, B33Y 10/00, B33Y 30/00, B22F 10/22

(54) **VERFAHREN UND VORRICHTUNG ZUR ADDITIVEN FERTIGUNG EINES BAUTEILS**
METHOD AND DEVICE FOR ADDITIVE PRODUCTION OF A COMPONENT
PROCÉDÉ ET DISPOSITIF DE FABRICATION ADDITIVE D'UN COMPOSANT

(30) Priorität: 19.02.2020 DE 102020104296
(43) Veröffentlichungstag der Anmeldung: 25.08.2021
(73) Patentinhaber: Grob-Werke GmbH & Co. KG, 87719 Mindelheim (DE)
(72) Erfinder: HIMMEL, Benjamin, 81249 München (DE); GLASSCHRÖDER, Johannes, 86356 Neusäß (DE); OTTER, Martin, 87700 Memmingen (DE); LEUSCH, Oliver, 86159 Augsburg (DE); MIKLEC, Christian, 86825 Bad Wörishofen (DE)
(74) Vertreter: Kramer Barske Schmidtchen Patentanwälte PartG mbB

(56) Entgegenhaltungen:
- US-A1- 2018 154 439
- US-B2- 7 604 768

## Beschreibung

Die vorliegende Offenbarung betrifft ein Verfahren und eine Vorrichtung zur additiven Fertigung eines Bauteils unter Verwendung einer Stützstruktur, die das zu fertigende Bauteil während der Fertigung zumindest teilweise abstützt.

Es gibt verschiedene additive Fertigungsverfahren, mittels derer ein Bauteil schichtweise gefertigt werden kann. Typische Verfahren für den Aufbau metallischer Bauteile sind etwa das als "Laser Powder Bed Fusion" (LPBF) bekannte Verfahren, das "Direct Energy Deposition" (DED) Verfahren und das sogenannte "Material Jetting" (MJT) Verfahren, bei dem schmelzflüssiges Material von einem Druckkopf durch eine oder mehrere individuell angesteuerte Düsen direkt auf eine Bauplattform gedruckt wird.

Additive Fertigungsverfahren zeichnen sich durch einen hohen Grad an Gestaltungsfreiheit und durch die werkzeuglose Fertigung aus. Daher eigenen sie sich besonders für Einzelteile und Bauteile mit einem hohen Grad an Komplexität, die mit konventionellen Fertigungsverfahren nicht oder nur unter großem Aufwand hergestellt werden können. Bei diesen additiven Fertigungsverfahren werden die Werkstücke basierend auf digitalen Modellen schichtweise oder elementweise aufgebaut. Stark überhängende Werkstücke können jedoch lediglich unter Verwendung weiterer Achsen für den Druckkopf und/oder die Bauplattform, oder unter Verwendung von Stützstrukturen gefertigt werden. Diese Stütz- oder Hilfsstrukturen sind notwendig, um beispielsweise bei Pulverbettverfahren die notwendige mechanische und thermische Anbindung an das Bauteil zu gewährleisten, oder um bei pulverfreien Verfahren überhaupt eine Unterlage für die Materialablage bereitzustellen.

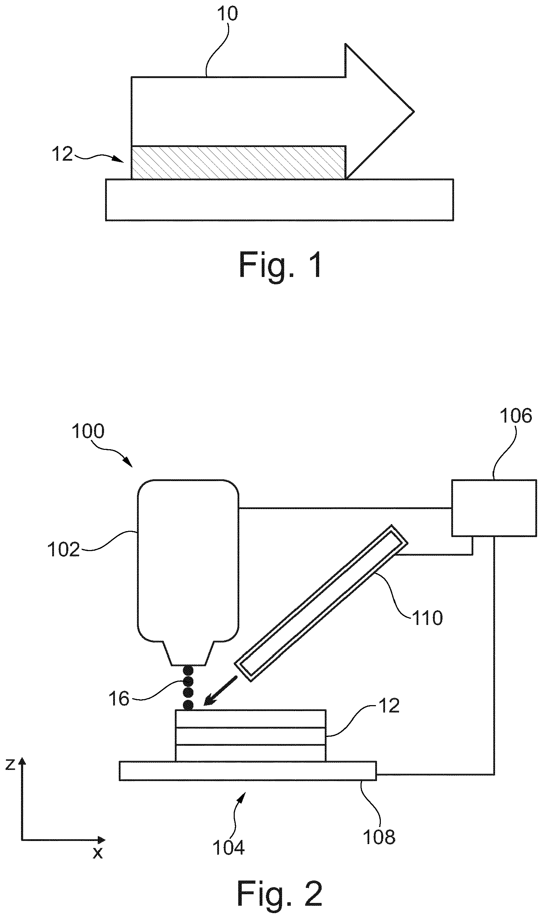

Ein Beispiel für ein Bauteil 10 mit einem Überhang, das mittels einer Stützstruktur gefertigt worden ist, ist in Fig. 1 gezeigt. Dort ist ersichtlich, dass, auch wenn Überhänge bis zu einem gewissen Winkel ohne Stützstrukturen gefertigt werden können, etwa die Spitze des Pfeils, für stark überhängende Bereiche wie den horizontalen Schaft des Pfeils eine entsprechende Stützstruktur 12 vorgesehen werden muss.

Beim MJT-Verfahren besteht die Möglichkeit, über einen zweiten Druckkopf ein weiteres Material aufzubringen, welches sich nach der Fertigung thermisch oder chemisch von dem Material des Bauteils trennen lässt. Beispielsweise kann als weiteres Material ein Kunststoff oder ein Salz verwendet werden. Entsprechende Verfahren sind in der US 10,315,247 B2 beschrieben.

Die US 7,604,768 B2 zeigt ein anderes Verfahren zum Drucken von dreidimensionalen Obj ekten.

Aufgabe der Erfindung ist es, eine Möglichkeit zu schaffen, Stützstrukturen zu verwenden, die einfach und effizient gefertigt und problemlos von dem zu fertigenden Bauteil getrennt werden können. Diese Aufgabe wird gelöst mit einem Verfahren nach Anspruch 1 und einer Vorrichtung nach Anspruch 7. Weiterbildungen der Erfindung sind in den abhängigen Ansprüchen angegeben.

Bei einem additiven Fertigungsverfahren, bei dem ein schmelzflüssiges Material durch eine oder mehrere Düsen auf eine Bauplattform gedruckt wird, wird die Qualität der Anbindung zwischen individuellen Tropfen unter anderem von den vorliegenden Temperaturen der darunterliegenden Schicht und dem Oxidationsgrad der darunterliegenden Schicht und des flüssigen Tropfens bestimmt. Kernidee der Erfindung ist es, eine Trennschicht auf die Stützstrukturen aufzutragen, wobei während der Fertigung dieser Trennschicht ein oder mehrere Prozessparameter derart eingestellt werden, dass zwischen den Schichten eine schlechte oder keine Anbindung entsteht. Dies ermöglicht insbesondere, dass die verwendeten Stützstrukturen aus demselben Material wie das für das Bauteil zu verwendende Material gefertigt werden können und daher lediglich ein einziger Druckkopf eingesetzt werden muss. Ferner sind keine zusätzlichen Achsen für den Druckkopf und/oder die Bauplattform erforderlich. Beides bedeutet eine erhebliche Verringerung eines Mehraufwands beim Bau einer entsprechenden Anlage.

Zur Verschlechterung der Anbindung zwischen Trennschicht und Stützstruktur und/oder Bauteil kann beispielsweise die Oberfläche der Stützstruktur und/oder der fliegende Tropfen lokal gekühlt werden. Alternativ oder zusätzlich dazu können die abgelegten und/oder fliegenden Tropfen während des Aufbringens der Trennschicht gezielt oxidiert werden, beispielsweise unter Einbringen eines flüssigen oder gasförmigen Oxidationsmediums. Dies kann auf besonders einfache Weise durch Verwendung verfügbarer Medien wie Stickstoff und Luft realisiert werden.

Ausführungsformen und Weiterbildungen der Erfindung werden im Folgenden anhand der Figuren beschrieben. Es zeigen:
FIG. 1 eine schematische Ansicht, die eine Fertigung eines Bauteils unter Verwendung einer Stützstruktur zeigt;
FIG. 2 eine schematische Ansicht einer Vorrichtung zur additiven Fertigung eines Bauteils gemäß einer Ausführungsform;
FIG. 3 eine Ansicht zur Veranschaulichung eines Aufbringens einer Trennschicht gemäß der Ausführungsform;
FIG. 4 eine Ansicht zur Veranschaulichung eines Aufbringens einer Materialschicht auf die Trennschicht in FIG. 3; und
FIG. 5 eine schematische Ansicht eines Druckkopfs gemäß einer weiteren Ausführungsform.

FIG. 2 zeigt eine schematische Ansicht einer Vorrichtung 100 zur additiven Fertigung eines Bauteils 10, beispielsweise des in FIG. 1 gezeigten Bauteils 10. Die Vorrichtung 100 weist einen Druckkopf 102 auf, der zum Aufbringen eines flüssigen Materials, insbesondere eines geschmolzenen Metalls, ausgebildet ist. Das Aufbringen erfolgt dabei auf bekannte Weise in Form von Tropfen des flüssigen Materials, das aus dem Druckkopf 102 ausgestoßen wird, wie dies bei dem MJT-Verfahren allgemein der Fall ist. Einzelheiten diesbezüglich werden daher in der vorliegenden Beschreibung weggelassen. Wie ebenfalls bekannt, weist die Vorrichtung 100 eine Verfahrvorrichtung 104 auf, die zum Verfahren des Druckkopfs 102 und des zu fertigenden Bauteils 10 relativ zueinander ausgebildet ist. Bei der vorliegenden Ausführungsform ist die Verfahrvorrichtung 104 beispielsweise dazu ausgebildet, eine Unterlage 108, auf der das Bauteil 10 gefertigt wird, bezüglich des Druckkopfs 102 zu verfahren. Selbstverständlich kann bei anderen Ausführungsformen die Verfahrvorrichtung 104 dazu ausgebildet sein, den Druckkopf 102 bezüglich der Unterlage 108 bzw. des zu fertigenden Bauteils 10 zu verfahren und gegebenenfalls zu kippen. Die Verfahrvorrichtung 104 ist mit einer Steuervorrichtung 106 verbunden, die zum Steuern des Druckkopfs 102 und der Verfahrvorrichtung 104, beispielsweise zum Verfahren derselben, ausgebildet ist.

Ferner ist die Steuervorrichtung 106 dazu ausgebildet, den Druckkopf zum Aufbringen von flüssigem Material 16 zum Ausbilden der Stützstruktur 12 für das zu fertigende Bauteil 10 anzusteuern. Bei dem in FIG. 2 gezeigten Beispiel werden zum Ausbilden einer im Wesentlichen rechtwinkligen (quaderförmigen) Stützstruktur 12 mehrere Schichten übereinander aufgebracht.

Bei der vorliegenden Ausführungsform erfolgt das Aufbringen des Materials 16 zum Fertigen der Stützstruktur analog zum Aufbringen des Materials 16 beim Fertigen des Bauteils 10. Mit anderen Worten, die Stützstruktur 12 wird unter im Wesentlichen denselben Bedingungen wie das Bauteil 10 gefertigt, besteht aus demselben Material und weist die im Wesentlichen selben Eigenschaften auf. Das

Material 16 für die Stützstruktur ist dasselbe wie das Material für das Bauteil 10, jedoch unterscheiden sich eine oder mehrere Eigenschaften der Stützstruktur 12 von den Eigenschaften des Bauteils 10. Dies wird bewirkt durch Ändern eines oder mehrerer

Arbeitsparameter beim Ausbilden der Stützstruktur 12 im Vergleich zu denselben Arbeitsparametern beim Ausbilden des Bauteils 10. Mögliche Arbeitsparameter sind im Anspruch 1 und im Anspruch 7 angegeben.

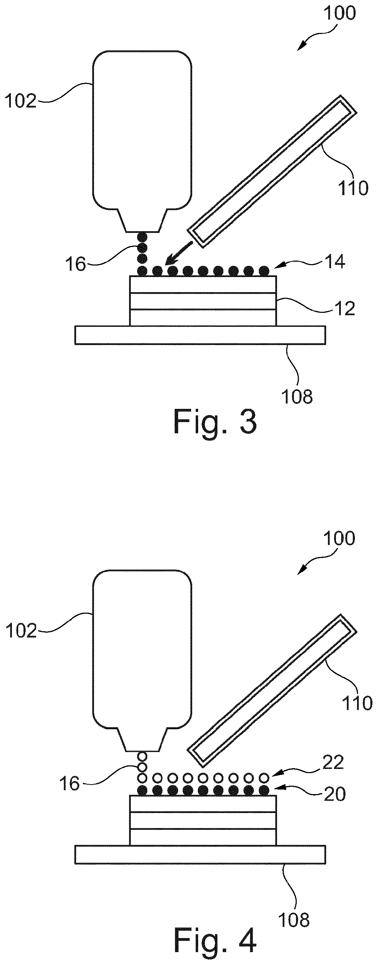

Nach Fertigstellung der Stützstruktur 12 ist die Steuervorrichtung 106 dazu ausgebildet, eine Trennstruktur 14 durch Aufbringen des flüssigen Materials 16 durch den Druckkopf 102 auf die Stützstruktur 12 auszubilden. Dies ist in FIG. 3 gezeigt. Wie in FIG. 3 gezeigt, wird mittels des Druckkopfs 102 eine Materialschicht der Trennstruktur 14 auf die Stützstruktur 12 aufgebracht. Dabei ist die Steuervorrichtung 106 ferner dazu ausgebildet, mindestens einen Arbeitsparameter derart zu ändern, dass sich mindestens eine Eigenschaft des Materials 16, das beim Ausbilden der Trennstruktur 14 aufgebracht wird, und/oder des Materials 16, auf das die Trennstruktur 14 aufgebracht wird, von der mindestens einen Eigenschaft des Materials 16 beim Ausbilden des Bauteils 10 und gegebenenfalls der Stützstruktur 12 unterscheidet. Bei der vorliegenden Ausführungsform steuert dazu die Steuervorrichtung 106 eine Kühlvorrichtung 110 an, die zum Zuführen eines Kühlmediums, beispielsweise ein Schutzgas wie N₂ oder Luft, ausgebildet ist. Der Arbeitsparameter ist in diesem Fall eine Menge einer Zufuhr des Kühlmediums. Es versteht sich, dass das Kühlmedium nicht gasförmig sein muss, sondern auch geeignete flüssige Kühlmedien, beispielsweise flüssige Schutzgase (Stickstoff, Argon, Helium), verwendet werden können.

Die Steuervorrichtung 106 steuert die Kühlvorrichtung 110 derart, dass die Temperatur des Materials 16, das beim Ausbilden der Trennstruktur 14 aufgebracht wird, und/oder des Materials 16, auf das die Trennstruktur 14 aufgebracht wird, gegenüber der Temperatur des Materials beim Ausbilden des Bauteils 10 und gegebenenfalls der Stützstruktur 12 verringert wird. Mit anderen Worten, bei der vorliegenden Ausführungsform aktiviert die Steuervorrichtung 106 entweder vor dem Aufbringen der Trennstruktur 14 oder während des Aufbringens derselben die Kühlvorrichtung 110. Auf diese Weise verringert sich die Temperatur entweder der obersten Schicht der Stützstruktur 12 oder der Schicht der Trennstruktur 14. Dies führt zu einer verschlechterten bzw. unvollständigen Anbindung der Tropfen zwischen der obersten Schicht der Stützstruktur 12 und der Schicht der Trennstruktur 14.

In einigen Fällen kann die Änderung der Eigenschaft des Materials beim Ausbilden der Trennstruktur 14 dazu führen, dass die entsprechende Materialschicht sich von der Höhe der Materialschicht in dem Bauteil 10 und gegebenenfalls in der Stützstruktur 12 unterscheidet. Um dies zu vermeiden, kann während es Ausbildens der Trennstruktur 14 mindestens ein weiterer Arbeitsparameter zum Anpassen der Höhe der Schicht der Trennstruktur geändert werden. Dieser mindestens eine weitere Arbeitsparameter kann beispielsweise eine Größe, eine Geschwindigkeit und/oder einen seitlichen Abstand von Tropfen des aufgebrachten Materials 16 beinhalten.

Nach Aufbringen der Trennstruktur 14, die beispielsweise aus einer Schicht 20 bestehen kann, wie dies in FIG. 4 gezeigt ist, ist die Steuervorrichtung 106 ferner dazu ausgebildet, mindestens einen Teil des zu fertigenden Bauteils 10 durch Aufbringen des flüssigen Materials 16 durch den Druckkopf 102 auf die Trennstruktur 14 auszubilden. Dabei wird, sofern dies nicht bereits vor dem Aufbringen der Schicht der Trennstruktur 14 erfolgt ist, der mindestens eine Arbeitsparameter entsprechend (zurück) geändert, so dass (erneut) eine gute Anbindung der einzelnen Tropfen, beispielsweise der darauffolgenden Schicht 22 des zu fertigenden Bauteils 10, erhalten wird. Während der Fertigung der weiteren Schichten des Bauteils 10 bleiben die Arbeitsparameter konstant, das heißt, bei der vorliegenden Ausführungsform bleibt die Kühlvorrichtung 110 deaktiviert.

Auf diese Weise kann das Bauteil 10, wie beispielsweise in FIG. 1 gezeigt, auf der Stützstruktur 12 fertiggestellt werden. Da die in FIG. 3 gezeigte Trennstruktur 14, beispielsweise die Schicht 20 mit geänderten Materialeigenschaften, insbesondere einer schlechteren Anbindung zwischen Trennstruktur 14 und Stützstruktur 12 als beispielsweise zwischen den einzelnen Schichten des Bauteils 10, vorgesehen ist, kann nach Abschluss der Fertigung des Bauteils 10 dieses ohne Weiteres an der Trennstruktur 14 getrennt werden, wobei beim vorliegenden Beispiel die Trennstruktur 14 aufgrund der schlechteren Anbindung zwischen den Tropfen derselben einen geringen Zusammenhalt aufweist und beim Trennen im Wesentlichen zerfällt. Eventuell an dem Bauteil 10 zurückbleibende Bestandteile der Trennstruktur 14 können ohne weiteres durch geeignete Säuberung (Waschen, Abstrahlen etc.) entfernt werden. Bei einigen Ausführungsformen kann jedoch auch eine Schicht der Trennstruktur an dem Bauteil 10 zurückbleiben und einen Teil (die äußerste Schicht) desselben bilden. In jedem Fall müssen keine aufwendigen Verfahren wie beispielsweise chemisches oder elektrochemisches Ätzen und dergleichen verwendet werden, um das Bauteil 10 von der Stützstruktur 12 zu trennen. Ferner können, wie bereits erläutert, die Stützstruktur 12 und die Trennstruktur 14 aus demselben Material wie das Bauteil 10 gefertigt werden, so dass die Fertigung von Stützstruktur 12 und Bauteil 10 mittels eines einzigen Druckkopfs erfolgen kann.

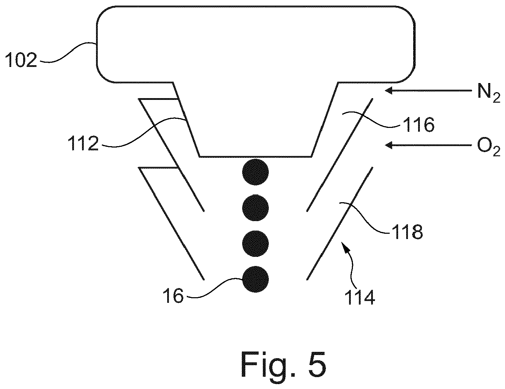

FIG. 5 zeigt eine weitere Ausführungsform der vorliegenden Erfindung. Bei der in FIG. 5 gezeigten Ausführungsform weist die Vorrichtung 100 ferner eine Oxidationsgaszufuhrvorrichtung 114 auf, die zum Zuführen eines Oxidationsgases, beispielsweise O₂, in einem Bereich stromabwärts eines Bereichs einer Öffnung 112 des Druckkopfs 102 ausgebildet ist. Bei der vorliegenden Ausführungsform ist die Steuervorrichtung 106 zum Steuern der Oxidationsgaszufuhrvorrichtung 114 zum Erhöhen des Grads der Oxidation des während des Ausbildens der Trennstruktur 14 aufgebrachten Materials 16 ausgebildet.

Dazu weist die Oxidationsgaszufuhrvorrichtung 114 bei der vorliegenden Ausführungsform eine die Öffnung 112 umgebende Düse mit zwei voneinander getrennten konzentrischen Zuführungen 116, 118 auf, wobei das Oxidationsgas über die äußere der Zuführungen zugeführt wird. Über die innere der Zuführungen kann beispielsweise ein Schutzgas wie N₂ zugeführt werden. Das Schutzgas direkt an der Düse schützt diese vor Oxidanlagerungen und schützt die Tropfenerzeugung selbst. Die Schutzgaszuführung ist beispielsweise dauerhaft aktiviert. Auf der anderen Seite wird während der Erzeugung der Trennschicht 20 (siehe FIG. 4) ein kleiner Gasstrom des Oxidationsgases über die Zuführung 118 hinzugegeben, was der Änderung des mindestens einen Arbeitsparameters gemäß der vorliegenden Anmeldung entspricht. Dadurch wird der Sauerstoffgehalt während des Tropfenfluges angehoben, und die Oberfläche des Tropfens des Materials 16 oxidiert rascher. Der Tropfen mit stärker oxidierter Oberfläche bindet schlechter an bestehendes Material, beispielsweise die oberste Schicht der Stützstruktur 12, und bildet so die Trennstruktur 14. Im Anschluss an das Ausbilden der Trennstruktur 14 wird der mindestens eine Arbeitsparameter wieder zurück geändert, d.h. die Zufuhr des Oxidationsgases wird gestoppt.

Auf diese Weise wird ebenfalls erreicht, dass nach Fertigstellen des Bauteils 10 aufgrund der schlechteren Anbindung an der Grenze zwischen der obersten Schicht der Stützstruktur 12 und der Schicht der Trennstruktur 14 das Bauteil 10 problemlos von der Stützstruktur 12 getrennt werden kann. Auch bei der vorliegenden Ausführungsform kann mindestens ein weiterer Arbeitsparameter angepasst werden, um eine konstante Schichthöhe beizubehalten. Dabei kann sowohl bei der vorliegenden Ausführungsform als auch bei der zuvor beschriebenen Ausführungsform die Trennstruktur 14 eine bis fünf Schichten aufweisen und beim Trennen im Wesentlichen zerfallen oder mit einer Schicht an dem Bauteil 10 haften bleiben und einen Teil desselben bilden. Gegebenenfalls ist es ausreichend, wenn die Trennstruktur 14 aus einer einzigen Schicht 20 besteht.

Auch wenn bei den vorliegenden Ausführungsformen beschrieben wurde, dass die Änderung der mindestens einen Eigenschaft beim Ausbilden der Trennstruktur 14 bewirkt, dass insbesondere die Anbindung zwischen der obersten Schicht der Stützstruktur 12 und der angrenzenden Schicht der Trennstruktur 14 verschlechtert wird, versteht sich, dass bei anderen Ausführungsformen insbesondere die Anbindung zwischen der obersten Schicht der Trennstruktur 14 und der darauf ausgebildeten ersten Schicht des Bauteils 10 durch die oben beschriebenen Maßnahmen verschlechtert werden kann. In diesem Fall verbleibt die Trennstruktur 14 nicht an dem Bauteil 10, sondern kann als Teil der Stützstruktur 12 betrachtet werden. Bei anderen Varianten kann sowohl die Anbindung zwischen Stützstruktur 12 und Trennstruktur 14 als auch zwischen Trennstruktur 14 und Bauteil 10 gezielt verschlechtert werden, um eine sichere Trennung zwischen Stützstruktur 12 und Bauteil 10 zu erzielen.

Ferner versteht sich, dass es zwar ausreicht, wenn beispielsweise lediglich die Temperatur der zugrundeliegenden Schicht der Stützstruktur 12 verringert wird, wenn die Tropfen des Materials 16 der Trennstruktur 14 aufgebracht werden, zusätzlich dazu jedoch auch die Temperatur der aufgebrachten Tropfen beispielsweisen während Zurücklegen des Wegs von der Düsenöffnung zu der Unterlage 108 verringert werden kann. Entsprechendes gilt auch für den Fall, dass die Anbindung zwischen Trennstruktur 14 und Bauteil 10 durch geeignete Kühlung verschlechtert werden soll.

Ebenso versteht sich, dass bei der in FIG. 5 gezeigten Ausführungsform oder Modifikationen derselben der Oxidationsgrad der aufgebrachten Tropfen und/oder der Oxidationsgrad der Schicht, auf die die Tropfen aufgebracht werden, verschlechtert werden kann. Dies gilt unabhängig davon, ob die Anbindung zwischen Stützstruktur 12 und Trennstruktur 14 oder die Anbindung zwischen Trennstruktur 14 und Bauteil 10 gezielt verschlechtert werden soll. Ferner ist auch eine Kombination mit der Kühlung der ersten Ausführungsform denkbar.

Ferner versteht sich, dass die Formen der Stützstruktur 12 und des Bauteils 10, die oben erläutert wurden, lediglich beispielhaft sind. Mit anderen Worten, es versteht sich, dass die Stützstruktur 12 eine beliebige Form aufweisen kann, die von der in den Figuren gezeigten, rechtwinkligen (quaderförmigen) Form abweicht. Entsprechendes gilt auch für die Form des Bauteils 10.

Darüber hinaus muss die Fertigung nicht schichtweise erfolgen, wie dies beispielsweise in FIG. 2 bis 4 gezeigt ist. Mit anderen Worten, die Trennstruktur 114 kann eine beliebige, gegebenenfalls eindimensionale oder auch dreidimensionale Form aufweisen, in Entsprechung zu der gewünschten Form des Bauteils 10. Ferner versteht sich, dass nicht das gesamte Bauteil 10 auf der Stützstruktur 12 ausgebildet werden muss, siehe beispielsweise die Pfeilspitze bei dem in FIG. 1 gezeigten Beispiel.

Die in der vorliegenden Beschreibung sowie den angehängten Patentansprüchen angegebenen Verfahrensschritte müssen nicht notwendigerweise in der angegebenen Reihenfolge durchgeführt werden, sondern können in beliebiger zeitlicher Reihenfolge durchgeführt werden, sofern dies technisch sinnvoll ist und zu keinem Widerspruch führt. Insbesondere kann eine schichtweise Fertigung derart erfolgen, dass in einer Ebene in einigen Bereichen eine Stütz- oder Trennstruktur ausgebildet wird, während in anderen Bereichen ein Teil des Bauteils 10 ausgebildet wird. Dies entspricht beispielsweise dem in FIG. 1 gezeigten Fall. Mit anderen Worten, jede einzelne Schicht kann einen oder mehrere Bereiche aufweisen, in denen die Stützstruktur oder die Trennstruktur ausgebildet ist, und einen oder mehrere Bereiche aufweisen, in denen ein Teil des Bauteils ausgebildet ist. Dies hat zur Folge, dass die Änderung des mindestens einen Arbeitsparameters bzw. der mindestens einen Eigenschaft innerhalb einer einzelnen Schicht bzw. mehrerer aufeinanderfolgender Schichten erfolgen kann. Dabei ist ersichtlich, dass die Steuerung 106 eine geeignete Steuerung derart durchführt, dass die Änderung an den entsprechenden Stellen erfolgt (beispielsweise die Übergänge zwischen Stützstruktur 12 und Pfeilspitze des Bauteils 10 in FIG. 1 beim schichtweisen Aufbau derselben).

Zusätzlich zu den im Vorhergehenden beschriebenen Beispielen für den mindestens einen Arbeitsparameter können auch weitere Arbeitsparameter verwendet werden, deren Änderung dazu beitragen kann, dass das zu fertigende Bauteil problemlos von der Stützstruktur getrennt werden kann.

Bei anderen Beispielen kann der mindestens eine Arbeitsparameter einen Abstand zwischen dem Druckkopf und der Oberfläche, auf die das Material aufgebracht wird, aufweisen, wobei die Änderung derart erfolgt, dass eine Flugzeit (eine Zeit zwischen Ausstoßen des Tropfens und Auftreffen des Tropfens auf dem jeweiligen Material) der Tropfen des Materials vergrö-ßert wird, wenn die Trennstruktur aufgebracht wird, so dass die Temperatur des Materials beim Ausbilden der Trennstruktur gegenüber der des Materials beim Ausbilden des Bauteils verringert wird. Ferner kann dadurch der Grad einer Oxidation des Materials beim Ausbilden der Trennstruktur gegenüber einem Grad einer Oxidation des Materials beim Ausbilden des Bauteils erhöht werden. Dies lässt sich beispielsweise durch eine Änderung des Abstands zwischen dem Druckkopf und der Unterlage einstellen, wobei sich versteht, dass sowohl der Druckkopf als auch die Unterlage bewegt werden können.

Ferner kann der mindestens eine Arbeitsparameter eine Leistung einer Heizung der Unterlage aufweisen, auf der das Bauteil angeordnet ist, wobei die Änderung derart erfolgt (beispielsweise die Leistung derart verringert wird), dass die Temperatur des Materials, auf das die Trennstruktur aufgebracht wird, gegenüber der Temperatur des Materials beim Ausbilden des Bauteils verringert wird. Auch dies führt dazu, dass die Trennstruktur leichter von dem Bauteil getrennt werden kann.

Es versteht sich, dass die oben genannten drei Beispiele für weitere Arbeitsparameter untereinander und mit den im Vorhergehenden beschriebenen Arbeitsparametern geeignet kombiniert werden können, sofern dies erwünscht ist.

Bei Ausführungsformen, bei denen der mindestens eine Arbeitsparameter in Zusammenhang mit einer Menge an Kühlmedium und/oder einer Menge an Oxidationsgas steht, beträgt die Änderung des Arbeitsparameters beim Ausbilden der Trennstruktur mindestens 10%, bevorzugt mindestens 20%, noch bevorzugter mindestens 50% oder sogar 90% oder mehr, zum Beispiel 100%.

Bei Ausführungsformen, bei denen der mindestens eine Arbeitsparameter in Zusammenhang mit einer Änderung des Abstands zwischen Druckkopf und Oberfläche und/oder der Flugzeit der Tropfen steht, beträgt die Änderung des Arbeitsparameters beim Ausbilden der Trennstruktur mindestens 100%, bevorzugt mindestens 200%, noch bevorzugter mindestens 300%, bis hin zu 900% oder mehr, beispielsweise eine Änderung des Abstands von etwa 1 mm auf etwa 1 cm.

Bei Ausführungsformen, bei denen beim Ausbilden der Trennstruktur die Tropfengröße geändert wird, beträgt die Änderung des Arbeitsparameters beim Ausbilden der Trennstruktur mindestens 10%, bevorzugt mindestens 20%, noch bevorzugter mindestens 30% oder sogar 50% oder mehr.

Bei Ausführungsformen, bei denen beim Ausbilden der Trennstruktur die Abstände zwischen benachbarten Tropfen geändert werden, beträgt die Änderung des Arbeitsparameters beim

Ausbilden der Trennstruktur mindestens 10%, bevorzugt mindestens 50%, noch bevorzugter mindestens 100% oder sogar 200% oder mehr. Entsprechendes gilt für Ausführungsformen, bei denen die Relativgeschwindigkeit zwischen Basis und Druckkopf geändert wird.

Bei Ausführungsformen, bei denen der mindestens eine Arbeitsparameter in Zusammenhang mit einer Änderung der Temperatur der Tropfen oder der Oberfläche, auf der das Material aufgebracht wird, steht, erfolgt die Änderung beim Ausbilden der Trennstruktur derart, dass die Temperatur um mindestens 10°C erniedrigt wird, bevorzugt mindestens 20°C, noch bevorzugter mindestens 30°C, bis hin zu 50°C oder mehr.

### Bezugszeichenliste

- 10: Bauteil
- 12: Stützstruktur
- 14: Trennstruktur
- 16: Material
- 20: Schicht
- 22: Schicht
- 100: Vorrichtung
- 102: Druckkopf
- 104: Verfahrvorrichtung
- 106: Steuervorrichtung
- 108: Unterlage
- 110: Kühlvorrichtung
- 112: Öffnung
- 114: Oxidationsgaszufuhrvorrichtung
- 116: Zuführung
- 118: Zuführung

## Patentansprüche

1. Verfahren zur additiven Fertigung eines Bauteils (10) durch tropfenweise Aufbringen eines flüssigen Materials (16) mittels eines Druckkopfs (102), mit folgenden Schritten:
Aufbringen des flüssigen Materials (16) durch den Druckkopf (102) zum Ausbilden einer Stützstruktur (12) für das zu fertigende Bauteil (10);
Ausbilden einer Trennstruktur (14) durch Aufbringen des flüssigen Materials (16) durch den Druckkopf (102) auf die Stützstruktur (12);
Ausbilden mindestens eines Teils des zu fertigenden Bauteils (10) durch Aufbringen des flüssigen Materials (16) durch den Druckkopf (102) auf die Trennstruktur; und
Trennen des Bauteils (10) von der Stützstruktur (12) an der Trennstruktur (14),
bei dem mindestens ein Arbeitsparameter derart geändert wird, dass sich mindestens eine Eigenschaft des Materials (16), das beim Ausbilden der Trennstruktur (14) aufgebracht wird, und/oder des Materials (16), auf das die Trennstruktur (14) aufgebracht wird, von der mindestens einen Eigenschaft des Materials (16) beim Ausbilden des Bauteils (10) unterscheidet, so dass eine Anbindung zwischen der Stützstruktur (12) und der Trennstruktur (14) und/oder eine Anbindung zwischen der Trennstruktur (14) und dem Bauteil (10) verschlechtert wird,
**dadurch gekennzeichnet, dass** der mindestens eine Arbeitsparameter mindestens einen der folgenden Arbeitsparameter aufweist:
- eine Menge eines Kühlmediums, beispielsweise ein Schutzgas wie N₂ oder Luft, das zugeführt wird, wobei die Änderung derart erfolgt, dass die Temperatur des Materials (16), das beim Ausbilden der Trennstruktur (14) aufgebracht wird, und/oder des Materials (16), auf das die Trennstruktur (14) aufgebracht wird, gegenüber der Temperatur des Materials (16) beim Ausbilden des Bauteils (10) verringert wird;
- eine Konzentration eines Oxidationsgases, beispielsweise O₂, wobei die Änderung derart erfolgt, dass ein Grad einer Oxidation des Materials (16), das beim Ausbilden der Trennstruktur (14) aufgebracht wird, und/oder des Materials (16), auf das die Trennstruktur (14) aufgebracht wird, gegenüber einem Grad einer Oxidation des Materials (16) beim Ausbilden des Bauteils (10) erhöht wird; und
- einen Abstand zwischen dem Druckkopf (102) und der Oberfläche, auf die das Material (16) aufgebracht wird, wobei der Abstand derart geändert wird, dass beim Ausbilden der Trennstruktur (14) die Flugzeit der einzelnen Tropfen gegenüber der beim Ausbilden des Bauteils (12) vergrößert wird, so dass die Temperatur des Materials beim Ausbilden der Trennstruktur gegenüber der des Materials beim Ausbilden des Bauteils verringert wird und/oder der Grad einer Oxidation der einzelnen Tropfen gegenüber dem beim Ausbilden des Bauteils (12) erhöht wird.

2. Verfahren nach Anspruch 1, bei dem der mindestens eine Arbeitsparameter mindestens eine Konzentration eines Oxidationsgases aufweist, ferner mit:
Zuführen eines Schutzgases in einem Bereich einer Öffnung (112) des Druckkopfs (102); und
Zuführen des Oxidationsgases in einem Bereich stromabwärts der Zufuhr des Schutzgases zum Erhöhen des Grads der Oxidation des aufgebrachten Materials (16) während des Ausbildens der Trennstruktur (14).

3. Verfahren nach Anspruch 1 oder 2, bei dem das Aufbringen des flüssigen Materials (16) schichtweise erfolgt, wobei eine Schicht (20) der Trennstruktur (14) im Wesentlichen eine selbe Höhe wie eine Schicht (22) des Bauteils (10) aufweist.

4. Verfahren nach Anspruch 3, bei dem die Trennstruktur (14) eine bis fünf Schichten (20) aufweist, insbesondere aus einer einzigen Schicht (22) gebildet wird.

5. Verfahren nach Anspruch 3 oder 4, ferner mit Ändern mindestens eines weiteren Arbeitsparameters während des Ausbildens der Trennstruktur (14) zum Anpassen der Höhe der Schicht (20), wobei der mindestens eine weitere Arbeitsparameter beispielsweise eine Größe, eine Geschwindigkeit und/oder einen zeitlichen Abstand von Tropfen des aufgebrachten Materials (16) aufweist.

6. Verfahren nach einem der vorhergehenden Ansprüche, bei dem der mindestens eine Arbeitsparameter ferner eine Leistung einer Heizung einer Unterlage (108), auf der das Bauteil (12) angeordnet ist, aufweist, wobei die Änderung der Leistung derart erfolgt, dass die Temperatur des Materials (16), auf das die Trennstruktur (14) aufgebracht wird, gegenüber der beim Ausbilden des Bauteils (12) verringert wird.

7. Vorrichtung (100) zur additiven Fertigung eines Bauteils (10), mit:
einem Druckkopf (102), der zum Aufbringen eines flüssigen Materials (16) ausgebildet ist;
einer Verfahrvorrichtung (104), die zum Verfahren des Druckkopfs (102) und des zu fertigenden Bauteils (10) relativ zueinander ausgebildet ist; und
einer Steuervorrichtung (106), die ausgebildet ist zum Steuern des Druckkopfs (102) und der Verfahrvorrichtung (104) zum:
tropfenweise Aufbringen des flüssigen Materials (16) durch den Druckkopf (102) zum Ausbilden einer Stützstruktur (12) für das zu fertigende Bauteil (10);
Ausbilden einer Trennstruktur (14) durch tropfenweise Aufbringen des flüssigen Materials (16) durch den Druckkopf (102) auf die Stützstruktur (12);
Ausbilden mindestens eines Teils des zu fertigenden Bauteils (10) durch tropfenweise Aufbringen des flüssigen Materials (16) durch den Druckkopf (102) auf die Trennstruktur (14),
bei der die Steuervorrichtung ferner dazu ausgebildet ist, mindestens einen Arbeitsparameter derart zu ändern, dass sich mindestens eine Eigenschaft des Materials (16), das beim Ausbilden der Trennstruktur (14) aufgebracht wird, und/oder des Materials (16), auf das die Trennstruktur (14) aufgebracht wird, von der mindestens einen Eigenschaft des Materials (16) beim Ausbilden des Bauteils (10) unterscheidet, so dass eine Anbindung zwischen der Stützstruktur (12) und der Trennstruktur (14) und/oder eine Anbindung zwischen der Trennstruktur (14) und dem Bauteil (10) verschlechtert wird,
**dadurch gekennzeichnet, dass** der mindestens eine Arbeitsparameter mindestens einen der folgenden Arbeitsparameter aufweist:
- eine Menge eines Kühlmediums, beispielsweise ein Schutzgas wie N₂ oder Luft, das zugeführt wird, wobei die Vorrichtung ferner eine Kühlvorrichtung (110), die zum Zuführen des Kühlmediums ausgebildet ist, aufweist und die Steuervorrichtung (106) die Kühlvorrichtung (110) derart steuert, dass die Temperatur des Materials (16), das beim Ausbilden der Trennstruktur (14) aufgebracht wird, und/oder des Materials (16), auf das die Trennstruktur (14) aufgebracht wird, gegenüber der Temperatur des Materials (16) beim Ausbilden des Bauteils (10) verringert wird;
- eine Konzentration eines Oxidationsgases, beispielsweise O₂, wobei die Vorrichtung ferner eine Oxidationsgaszufuhrvorrichtung (114), die zum Zuführen des Oxidationsgases in einem Bereich stromabwärts eines Bereichs einer Öffnung (112) des Druckkopfs (102) ausgebildet ist, aufweist und die Steuervorrichtung (106) die Oxidationsgaszufuhrvorrichtung (114) derart steuert, dass ein Grad einer Oxidation des Materials (16), das beim Ausbilden der Trennstruktur (14) aufgebracht wird, und/oder des Materials (16), auf das die Trennstruktur (14) aufgebracht wird, gegenüber einem Grad einer Oxidation des Materials (16) beim Ausbilden des Bauteils (10) erhöht wird; und
- einen Abstand zwischen dem Druckkopf (102) und der Oberfläche, auf die das Material (16) aufgebracht wird, wobei die Steuervorrichtung (106) den Abstand derart ändert, dass beim Ausbilden der Trennstruktur (14) die Flugzeit der einzelnen Tropfen gegenüber der beim Ausbilden des Bauteils (12) vergrößert wird, so dass die Temperatur des Materials beim Ausbilden der Trennstruktur gegenüber der des Materials beim Ausbilden des Bauteils verringert wird und/oder der Grad einer Oxidation der einzelnen Tropfen gegenüber dem beim Ausbilden des Bauteils (12) erhöht wird.

8. Vorrichtung nach Anspruch 7, bei der der mindestens eine Arbeitsparameter mindestens eine Konzentration eines Oxidationsgases aufweist und die Oxidationsgaszufuhrvorrichtung (114) eine die Öffnung (112) umgebende Düse mit zwei voneinander getrennten konzentrischen Zuführungen (116, 118) aufweist, wobei das Oxidationsgas über die äußere der Zuführungen zugeführt wird.

## Claims

1. Method for additive manufacturing of a component (10) by dropwise applying a liquid material (16) using a printhead (102), comprising the following steps:
applying the liquid material (16) using the printhead (102) to form a support structure (12) for the component (10) to be manufactured;
forming a separating structure (14) by applying the liquid material (16) to the support structure (12) using the printhead (102);
forming at least a portion of the to-be-manufactured component (10) on the separating structure by applying the liquid material (16) using the printhead (102); and
separating the component (10) from the support structure (12) at the separating structure (14),
wherein at least one operating parameter is changed such that at least one property of the material (16) that is applied when forming the separating structure (14) and/or of the material (16) to which the separating structure (14) is applied, differs from the at least one property of the material (16) when forming the component (10) so that a connection between the support structure (12) and the separating structure (14) and/or a connection between the separating structure (14) and the component (10) is weakened,
**characterized in that** the at least one operating parameter includes at least one of the following operating parameters:
- an amount of a cooling medium, for example, a protective gas such as N₂ or air, which is supplied, wherein the change is effected such that the temperature of the material (16) that is applied during formation of the separating structure (14), and/or of the material (16) to which the separating structure (14) is applied is reduced relative to the temperature of the material (16) when the component (10) is formed;
- a concentration of an oxidizing gas, for example, O₂, wherein the change is effected such that a degree of oxidation of the material (16) that is applied when forming the separating structure (14), and/or of the material (16) to which the separating structure (14) is applied is increased relative to a degree of oxidation of the material (16) when the component (10) is formed; and
- a distance between the printhead (102) and the surface to which the material (16) is applied, wherein the distance is changed such that, when forming the separation structure (14), the flight time of the individual droplets is reduced compared to that when forming the component (12), and/or the degree of oxidation of the individual droplets is increased compared to that when forming the component (12).

2. Method according to claim 1, wherein the at least one operating parameter includes at least a concentration of an oxidizing gas, further comprising:
supplying a protective gas in a region of an opening (112) of the printhead (102); and
supplying the oxidizing gas in a region downstream of the supply of the protective gas to increase the degree of oxidation of the applied material (16) during the formation of the separating structure (14).

3. Method according to claim 1 or 2, wherein the applying of the liquid material (16) is effected layer by layer, wherein a layer (20) of the separating structure (14) has substantially a same height as a layer (22) of the component (10).

4. Method according to claim 3, wherein the separating structure (14) has one to five layers (20), in particular is formed from a single layer (22).

5. Method according to claim 3 or 4, further comprising changing of at least one additional operating parameter during the formation of the separating structure (14) to adjust the height of the layer (20), wherein the at least one additional operating parameter includes, for example, a size, a speed and/or a time interval of drops of the applied material (16).

6. Method according to any one of the preceding claims, wherein the at least one operating parameter further includes a power output of a heater of a base (108) on which the component (12) is disposed, wherein the change in power is effected such that the temperature of the material (16), to which the separating structure (14) is applied, is reduced compared to that when forming the component (12).

7. Apparatus (100) for additive manufacturing of a component (10), comprising:
a printhead (102) that is configured to apply a liquid material (16);
a displacing device (104) that is configured to displace the printhead (102) and the to-be-manufactured component (10) relative to one another; and
a control device (106) that is configured to control the printhead (102) and the displacing device (104) to:
dropwise apply the liquid material (16) using the printhead (102) to form a support structure (12) for the to-be-manufactured component (10);
form a separating structure (14) by dropwise applying the liquid material (16) to the support structure (12) using the printhead (102);
form at least part of the to-be-manufactured component (10) by applying the liquid material (16) to the separating structure (14) using the printhead (102),
wherein the control device is further configured to change at least one operating parameter such that at least one property of the material (16) that is applied when forming the separating structure (14) and/or of the material (16), to which the separating structure (14) is applied, differs from the at least one property of the material (16) when forming the component (10) so that a connection between the support structure (12) and the separating structure (14) and/or a connection between the separating structure (14) and the component (10) is weakened,
**characterized in that** the at least one operating parameter includes at least one of the following operating parameters:
- an amount of a cooling medium, for example, a protective gas such as N₂ or air, which is supplied, wherein the change is effected such that the temperature of the material (16) that is applied during formation of the separating structure (14), and/or of the material (16) to which the separating structure (14) is applied is reduced relative to the temperature of the material (16) when the component (10) is formed;
- a concentration of an oxidizing gas, for example, O₂, wherein the change is effected such that a degree of oxidation of the material (16) that is applied when forming the separating structure (14), and/or of the material (16) to which the separating structure (14) is applied is increased relative to a degree of oxidation of the material (16) when the component (10) is formed; and
- a distance between the printhead (102) and the surface to which the material (16) is applied, wherein the distance is changed such that, when forming the separation structure (14), the flight time of the individual droplets is reduced compared to that when forming the component (12), and/or the degree of oxidation of the individual droplets is increased compared to that when forming the component (12).

8. Apparatus according to claim 7, wherein the at least one operating parameter includes at least a concentration of an oxidizing gas, and the oxidizing gas supply device (114) includes a nozzle surrounding the opening (112) and having two spaced-apart concentric inlets (116, 118), wherein the oxidizing gas is supplied via the outer one of the inlets.

## Revendications

1. Procédé de fabrication additive d'un composant (10) par application goutte à goutte d'un matériau liquide (16) à l'aide d'une tête d'impression (102), avec les étapes suivantes :
application du matériau liquide (16) par la tête d'impression (102) pour former une structure de support (12) pour le composant (10) à fabriquer ;
formation d'une structure de séparation (14) par application du matériau liquide (16) par la tête d'impression (102) sur la structure de support (12) ;
formation d'au moins une partie du composant (10) à fabriquer par application du matériau liquide (16) par la tête d'impression (102) sur la structure de séparation ; et
séparation du composant (10) de la structure de support (12) au niveau de la structure de séparation (14),
dans lequel au moins un paramètre de travail est modifié de telle manière qu'au moins une propriété du matériau (16) qui est appliqué lors de la formation de la structure de séparation (14), et/ou du matériau (16) sur lequel la structure de séparation (14) est appliquée, diffère de l'au moins une propriété du matériau (16) lors de la formation du composant (10), de sorte qu'une liaison entre la structure de support (12) et la structure de séparation (14) et/ou une liaison entre la structure de séparation (14) et le composant (10) soit détériorée,
**caractérisé en ce que** l'au moins un paramètre de travail comprend au moins l'un des paramètres de travail suivants :
- une quantité d'un milieu de refroidissement, par exemple un gaz protecteur comme N₂ ou de l'air, qui est alimentée, la modification étant telle que la température du matériau (16) qui est appliqué lors de la formation de la structure de séparation (14), et/ou du matériau (16) sur lequel la structure de séparation (14) est appliquée, soit réduite par rapport à la température du matériau (16) lors de la formation du composant (10) ;
- une concentration d'un gaz oxydant, par exemple de l'O₂, la modification étant telle qu'un degré d'une oxydation du matériau (16) qui est appliqué lors de la formation de la structure de séparation (14), et/ou du matériau (16) sur lequel la structure de séparation (14) est appliquée, soit augmenté par rapport à un degré d'une oxydation du matériau (16) lors de la formation du composant (10) ; et
- une distance entre la tête d'impression (102) et la surface sur laquelle le matériau (16) est appliqué, la distance étant modifiée de telle manière que lors de la formation de la structure de séparation (14), le temps de vol des gouttelettes individuelles soit augmenté par rapport à celui lors de la formation du composant (12), de sorte que la température du matériau lors de la formation de la structure de séparation soit réduite par rapport à celle du matériau lors de la formation du composant, et/ou de sorte que le degré d'une oxydation des gouttelettes individuelles soit augmenté par rapport à celui lors de la formation du composant (12).

2. Procédé selon la revendication 1, dans lequel l'au moins un paramètre de travail comprend au moins une concentration d'un gaz oxydant, comprenant en outre :
alimentation d'un gaz protecteur dans une zone d'un orifice (112) de la tête d'impression (102) ; et
alimentation du gaz oxydant dans une zone en aval de l'alimentation du gaz protecteur pour augmenter le degré d'oxydation du matériau (16) appliqué pendant la formation de la structure de séparation (14).

3. Procédé selon la revendication 1 ou 2, dans lequel l'application du matériau liquide (16) se fait en couches, une couche (20) de la structure de séparation (14) ayant sensiblement la même hauteur qu'une couche (22) du composant (10).

4. Procédé selon la revendication 3, dans lequel la structure de séparation (14) comporte une à cinq couches (20), et en particulier est formée d'une seule couche (22).

5. Procédé selon la revendication 3 ou 4, comprenant en outre la modification d'au moins un paramètre de travail additionnel pendant la formation de la structure de séparation (14) pour ajuster la hauteur de la couche (20), l'au moins un paramètre de travail additionnel comportant par exemple une taille, une vitesse et/ou un intervalle de temps de gouttes du matériau (16) appliqué.

6. Procédé selon l'une des revendications précédentes, dans lequel l'au moins un paramètre de travail comprend en outre une puissance d'un élément chauffant d'une base (108), sur laquelle le composant (12) est agencé, le changement de puissance étant effectué de telle manière que la température du matériau (16) sur lequel la structure de séparation (14) est appliquée, soit réduite par rapport à celle lors de la formation du composant (12).

7. Dispositif (100) pour la fabrication additive d'un composant (10), comprenant :
une tête d'impression (102) configurée pour appliquer un matériau liquide (16) ;
un dispositif de déplacement (104) configuré pour déplacer la tête d'impression (102) et le composant (10) à fabriquer l'un par rapport à l'autre ; et
un dispositif de commande (106) configuré pour contrôler la tête d'impression (102) et le dispositif de déplacement (104) afin de :
appliquer goutte à goutte le matériau liquide (16) par la tête d'impression (102) pour former une structure de support (12) pour le composant (10) à fabriquer ;
former une structure de séparation (14) par application goutte à goutte du matériau liquide (16) par la tête d'impression (102) sur la structure de support (12) ;
former au moins une partie du composant (10) à fabriquer par application goutte à goutte du matériau liquide (16) par la tête d'impression (102) sur la structure de séparation (14),
dans lequel le dispositif de commande est en outre configuré pour modifier au moins un paramètre de travail de telle manière qu'au moins une propriété du matériau (16) qui est appliqué lors de la formation de la structure de séparation (14), et/ou du matériau (16) sur lequel la structure de séparation (14) est appliquée, diffère de l'au moins une propriété du matériau (16) lors de la formation du composant (10), de sorte qu'une liaison entre la structure de support (12) et la structure de séparation (14) et/ou une liaison entre la structure de séparation (14) et le composant (10) soit détériorée,
**caractérisé en ce que** l'au moins un paramètre de travail comprend au moins l'un des paramètres de travail suivants :
- une quantité d'un milieu de refroidissement, par exemple un gaz protecteur comme N₂ ou de l'air, qui est alimentée, le dispositif comprenant en outre un dispositif de refroidissement (110) configuré pour alimenter le milieu de refroidissement, et le dispositif de commande (106) contrôlant le dispositif de refroidissement (110) de telle manière que la température du matériau (16) qui est appliqué lors de la formation de la structure de séparation (14), et/ou du matériau (16) sur lequel la structure de séparation (14) est appliquée, soit réduite par rapport à la température du matériau (16) lors de la formation du composant (10) ;
- une concentration d'un gaz oxydant, par exemple de l'O₂, le dispositif comprenant en outre un dispositif d'alimentation en gaz oxydant (114) configuré pour alimenter le gaz oxydant dans une zone en aval d'une zone d'un orifice (112) de la tête d'impression (102), et le dispositif de commande (106) contrôlant le dispositif d'alimentation en gaz oxydant (114) de telle manière qu'un degré d'une oxydation du matériau (16) qui est appliqué lors de la formation de la structure de séparation (14), et/ou du matériau (16) sur lequel la structure de séparation (14) est appliquée, soit augmenté par rapport à un degré d'une oxydation du matériau (16) lors de la formation du composant (10) ; et
- une distance entre la tête d'impression (102) et la surface sur laquelle le matériau (16) est appliqué, le dispositif de commande (106) modifiant la distance de telle manière que lors de la formation de la structure de séparation (14), le temps de vol des gouttelettes individuelles soit augmenté par rapport à celui lors de la formation du composant (12), de sorte que la température du matériau lors de la formation de la structure de séparation soit réduite par rapport à celle du matériau lors de la formation du composant, et/ou de sorte que le degré d'une oxydation des gouttelettes individuelles soit augmenté par rapport à celui lors de la formation du composant (12).

8. Dispositif selon la revendication 7, dans lequel l'au moins un paramètre de travail comprend au moins une concentration d'un gaz oxydant, et le dispositif d'alimentation en gaz oxydant (114) comprend une buse entourant l'orifice (112) avec deux conduites d'alimentation concentriques (116, 118) séparées l'une de l'autre, le gaz oxydant étant alimenté à travers celle des conduites qui se trouve à l'extérieur.
